# EUROPEAN PATENT APPLICATION

(11) **EP 2 022 709 A1**
(43) Date of publication of application: **11.02.2009**
(21) Application number: 07743963.6
(22) Date of filing: 23.05.2007
(51) Int. Cl.: B62J 33/00, B62K 21/26, H05B 3/06

(54) **GRIP MEMBER PROVIDED WITH ELECTROTHERMAL HEATER**

(30) Priority: 26.05.2006 JP 2006147441
(71) Applicant: Mitsubishi Cable Industries, Ltd., Chiyoda-ku Tokyo 100-8303 (JP)
(72) Inventor: FUKUDA, Yuichi, Tokyo 176-8516 (JP); SASAKI, Kouzou, Tokyo 176-8516 (JP); FUJIWARA, Satoru, Tokyo 176-8516 (JP); KOYANAGI, Shigeki, Tokyo 176-8516 (JP)
(74) Representative: Bibby, William Mark
(86) International application number: PCT/JP2007/060529
(87) International publication number: WO 2007/138957

(57) **Abstract**

Provided is a grip member having an electrothermal heater, wherein an end section of a metal strip does not curl up when the metal strip is attached. A metal strip (21) machined in strip-shape is embedded along a spiral flat groove section arranged on a core body (1) and fixed to the core body (1) at the both ends. An end portion (21a) of the metal strip (21) is inserted into a locking member (7), and the end portion (21a) is prevented from curling up. Since curl up of the end portion (21a) is suppressed, the metal strip is prevented from protruding to the outside from a synthetic rubber applied in the subsequent step and the thickness of the synthetic rubber at such section is prevented from thinning.

## Description

### Field of the Invention

The present invention relates to a grip member provided with electrothermal heater, which is secured to a handle of motorcycles and snowmobiles.

### Background of the Invention

In handle grip members of motorcycles and snowmobiles used in cold districts, electric heating wires are installed within handle grip members made of synthetic rubber for warming hands of users as described in, for instance the following Patent Document 1. In this known handle grip member, an electric heating wire is wound helically around a core body made of a synthetic resin along a helical groove formed in the surface of the core body and the heating wire is covered with a synthetic rubber by molding.

In the known handle grip disclosed in the Patent Document 1, since the electric heating wire having a circular cross section is wound within the groove, there is formed gaps between the electric wire and the groove. Moreover, a surface of the assembly of the core body and heating wire is not flat, but has configuration with depressions and protrusions. In order to prevent such a configuration with depressions and protrusions from being transferred to a hand of a user, it is necessary to mold the synthetic rubber to have a larger thickness. Then, it is apparent that heat generated by the electric heating wire could not be transferred to the user's hand effectively.

The present applicant has filed a Japanese patent application No. 2004-363413, in which a metal conductor strip having a given width is helically wound around a core body along a flat groove formed in a surface of the core body.

The Patent document 1: U.S. Patent Specification 4,990,753

### Disclosure of the Invention

### Problems to be solved by the Invention

In the grip member disclosed in the above mentioned prior application, an end of the conductor strip might be removed from the flat groove and protrude upwardly. Then, upon molding a synthetic rubber cover, the end of the conductor strip might injure the synthetic rubber cover and protrude from the synthetic rubber cover or the synthetic rubber cover might be thin at a portion where the end of the conductor strip extends outwardly. This might affect the insulating property of the synthetic rubber cover.

The present invention has for its object to provide a grip member provided with electrothermal heater in which the above mentioned problems can be overcome by preventing the end of the conductor strip from extruding upwardly.

### Means for Solving the Problems

According to the invention, in order to achieve the above mentioned object, a grip member provided with electrothermal heater comprising a cylindrical core body which is made of a synthetic resin and has a flat and shallow groove having a given width formed spirally in a surface of the core body, and a metal strip having a width slightly smaller than a width of said flat and shallow groove and being embedded within said flat and shallow groove, said metal strip generating heat by supplying an electric current through the metal strip, characterized in that a locking member is provided at an end of said flat and shallow groove for fixing an end of the metal strip at position.

### Merits of the Invention

In the grip member provided with electrothermal heater according to the invention, since the metal strip is installed within the flat and shallow helically formed groove such that the end of the metal strip is locked at position by the locking member provided on the core body, the end of the metal strip is effectively prevented from protruding outwardly upon molding the synthetic rubber cover.

### Brief Description of the Drawings

Fig. 1 is a perspective view showing a core body of the grip member according to the invention;
Fig. 2 is a perspective view illustrating a condition in which a heat generating metal strip is wound spirally around the core body; and
Fig. 3 is a longitudinal cross sectional view depicting a condition in which a synthetic rubber is formed around the core body by molding.

### Explanation of the Reference Numerals

1 core body
2 ring-shaped portion
3 guide portion
4 flat and shallow groove
7 locking member
8 power supply wire guide recess
10 cable guide recess
21 metal strip
21a end portion
21b start portion
22a, 22b power supply wire
23 power supply cable
24 synthetic rubber

### Best Modes of the Invention

Now the present invention will be explained in detail with reference to the embodiment shown in the drawings.

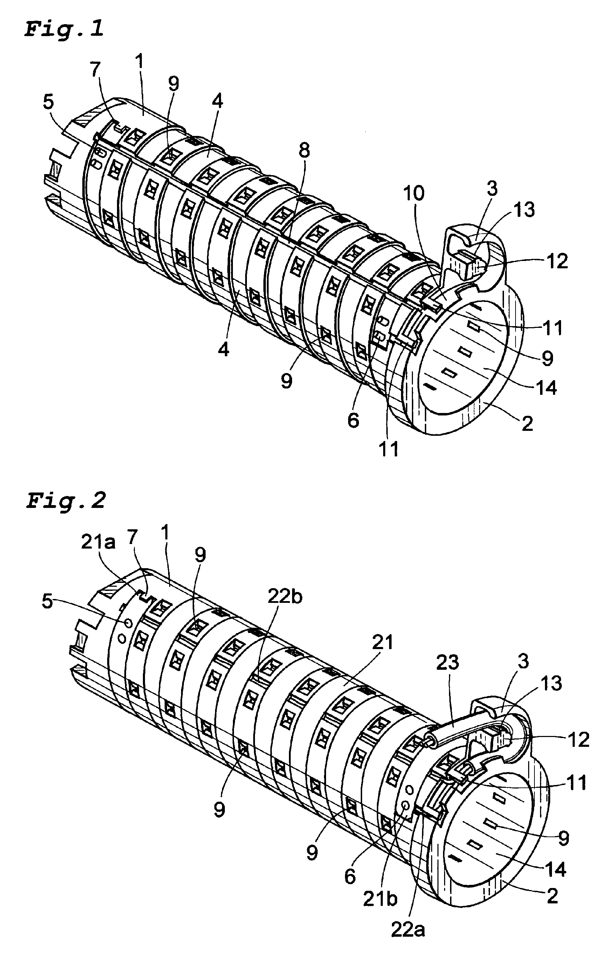

Fig. 1 is a perspective view showing an embodiment of the grip member provided with electrothermal heater according to the invention. A core body 1 constituting a major portion of the grip member is formed by a cylindrical member made of a synthetic resin, and includes a ring-shaped portion 2 formed at a root of the core body 1. The ring-shaped portion 2 has formed therein a guide portion 3 for supporting an electric power supply cable to be explained later. In an outer surface of the core body 1, there is formed a flat and shallow helical groove 4. At each of start portion and an end portion of the flat and shallow groove 4, there are formed a plurality of pins 5 and 6 for fixing a metal strip serving as an electrothermal heater to be explained later. Furthermore, at an extreme end of the flat and shallow groove 4, there is formed a locking member 7 in a shape of tongue. It should be noted that the core body 1 may be formed by cementing two semi-cylindrical members into a unit body.

In the outer surface of the core body 1 there is further formed a longitudinal power supply wire guide recess 8 for guiding a power supply wire which is used to supply an electric current to the metal strip to be explained later. A depth of the power supply wire guide recess 8 is larger than a depth of the flat and shallow groove 4. A number of openings 9 are formed in a surface area of the core body 1 except for the flat and shallow groove 4, said openings extending from the outer surface of the core body 1 to an inner surface of the core body.

The guide portion 3 includes a power supply cable guide recess 10 and a supporting lugs 11 is provided in a part of power cable guide recess 10 for preventing movement of the power supply wire to the outside. Furthermore, the power cable guide recess 10 is formed in a U-shape manner around a wire direction converting portion 12. On an outer surface of the wire direction converting portion 12, there are formed ridges 13 extending in a longitudinal direction of the core body 1 for preventing undesired slip of the power supply wire.

On the inner surface of the core body 1, there are formed a plurality of protrusions 14 each having a mountain shape cross section, said protrusions extending in the longitudinal direction of the core body 1 and serving to improve adherence of a synthetic rubber to the core body 1 upon molding.

Fig. 2 is a perspective view showing a condition in which a band-shaped metal strip 21 is embedded in the flat and shallow groove 4. The metal strip 21 may be formed by punching a SUS (stainless steel) plate having a thickness of, for instance 30µm into a narrow band having a width slightly smaller than a width of the flat and shallow groove 4. The metal strip 21 is inserted into the flat and shallow groove 4 such that the metal strip 21 is wound around the core body 1 spirally. Both end portions of the metal strip 21 are secured to the core body 1. That is to say, the pins 5 and 6 projecting from the core body 1 are inserted into openings formed in the end portions of the metal strip 21, and then top potions of the pins 5 and 6 are melt and deformed by heat. Prior to this fixing operation, an extreme end 21a of the metal strip 21 is inserted into a space formed under the locking member 7 such that the extreme end 21a of the metal strip 21 could not be jumped up out of the outer surface of the core body 1.

A power supply cable 23 including two power supply wires 22a and 22b is introduced into the cable guide recess 10 and is turned around the direction converting portion 12. The power supply wire 22a extending from the cable 23 is connected by soldering to an end portion 21b of the metal strip 21 around the ring-shaped portion 2. The other power supply wire 22b is extended with a long distance and is inserted into the power supply wire guide recess 8 before the metal strip 21 is inserted into the flat and shallow groove 4. An end of the power supply wire 22b is secured by soldering to the other end portion 21a of the metal strip 21.

The cable 23 including the power supply wires 22a and 22b is inserted into the cable guide recess 10 and is turned around the direction converting portion 12 by 180° such that the cable faces in a direction parallel to a direction in which the cable 23 is introduced. Therefore, even if the cable 23 is pulled outwardly, the cable 23 could not be drawn from the grip member due to the function of the ridges 13. Moreover, any lateral movement of the power supply wires 22a and 22b could be prevented by wire supporting lugs 11.

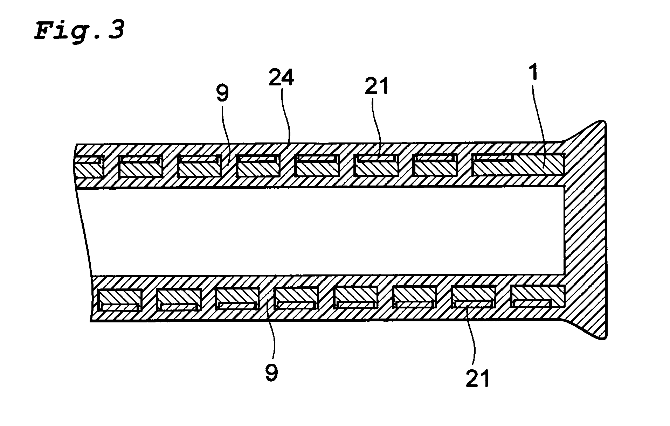

Fig. 3 is a longitudinal cross sectional view showing a condition in which an assembly of the core body 1 and metal strip 21 is covered with a synthetic rubber 24 by injection mold. During the molding of the synthetic rubber 24, the synthetic rubber material can be effectively intruded into both the outer and inner surfaces of the assembly through the openings 9. An outer surface of the synthetic rubber 24 constitutes a final surface of the grip member and an inner surface of the synthetic rubber 24 constitutes an anti-slip surface upon inserting a handle pipe into the inner surface the synthetic rubber 24.

In the grip member according to the invention, undesired jump-up of the end portion 21a of the metal strip 21 can be effectively prevented by the locking member 7, and therefore the end portion 21a could not be protruded outwardly from the injection-molded synthetic rubber 24. It should be noted that a cylindrical synthetic rubber according to the invention can be made by a process other than injection molding and, even such a synthetic rubber is inserted into a core body, a cut of the synthetic rubber by a jump-up portion of a metal strip is not realized.

The grip member manufactured in the manner explained above may be secured to a hand pipe of a motorcycle. When en electric current flows to the metal strip 21 via the power supply wires 22a and 22b, heat generated from the metal strip 21 can be effectively transferred to a hand of a user.

## Claims

1. A grip member provided with electrothermal heater comprising a cylindrical core body which is made of a synthetic resin and has a flat and shallow groove having a given width formed spirally in a surface of the core body, and a metal strip having a width slightly smaller than a width of said flat and shallow groove and being embedded within said flat and shallow groove, said metal strip generating heat by supplying an electric current through the metal strip, **characterized in that** a locking member is provided at an end of said flat and shallow groove for fixing an end of the metal strip at position.

2. The grip provided with electrothermal heater according to claim 1, **characterized in that** said locking member is formed in a form of a tongue like member which covers the end of the metal strip.

3. The grip member provided with electrothermal heater according to claim 1 or 2, **characterized in that** said metal strip is embedded within said flat and shallow groove such that an assembly of the core body and metal strip has a substantially flat surface.

4. The grip member provided with electrothermal heater according to any one of claims 1-3, **characterized in that** said core body has a power supply wire guide recess formed in an outer surface of the core body in a longitudinal direction such that the power supply wire guide recess has a depth larger than a depth of said flat and shallow groove, a power supply wire is embedded within said power supply wire guide recess and an end portion of the power supply wire is connected to an end portion of said metal strip.

5. The grip member provided with electrothermal heater according to any one of claims 1-4, **characterized in that** outer and inner surface of said core body as well as the metal strip are covered with a mold of a synthetic rubber.

6. The grip member provided with electrothermal heater according to any one of claims 2-5, **characterized in that** said core body has a number of through holes in an area except for the flat and shallow groove.
